(19) Europäisches Patentamt
European Patent Office
Office européen des brevets

(11) **EP 2 771 800 B1**

(12) **FASCICULE DE BREVET EUROPEEN**

(45) Date de publication et mention
de la délivrance du brevet:
**05.08.2015   Bulletin 2015/32**

(51) Int Cl.:
**G06F 13/16** (2006.01)    **G06F 15/78** (2006.01)
**H04L 12/933** (2013.01)    **H04L 12/801** (2013.01)
**H04L 12/931** (2013.01)    **H04L 12/873** (2013.01)

(21) Numéro de dépôt: **12794773.7**

(22) Date de dépôt: **09.10.2012**

(86) Numéro de dépôt international:
**PCT/IB2012/055445**

(87) Numéro de publication internationale:
**WO 2013/061190 (02.05.2013 Gazette 2013/18)**

(54) **GESTION DE FLUX DANS UN RESEAU SUR PUCE**

STREAMVERWALTUNG IN EINEM ON-CHIP-NETZWERK

STREAM MANAGEMENT IN AN ON-CHIP NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **28.10.2011   FR 1159854**

(43) Date de publication de la demande:
**03.09.2014   Bulletin 2014/36**

(73) Titulaire: **Kalray
91400 Orsay (FR)**

(72) Inventeurs:
- **HARRAND, Michel
  38120 Saint Egreve (FR)**
- **DURAND, Yves
  38330 Saint Ismier (FR)**
- **COUVERT, Patrice
  38330 Saint-ISMIER (FR)**
- **CHAMPSEIX, Thomas
  38100 Grenoble (FR)**
- **DUPONT DE DINECHIN, Benoit
  38000 Grenoble (FR)**

(74) Mandataire: **de Jong, Jean Jacques et al
Omnipat
24, place des Martyrs de la Résistance
13100 Aix en Provence (FR)**

(56) Documents cités:
**WO-A2-2006/059277**

- **CIPRIAN SEICULESCU ET AL: "A DRAM Centric
  NoC Architecture and Topology Design
  Approach", VLSI (ISVLSI), 2011 IEEE COMPUTER
  SOCIETY ANNUAL SYMPOSIUM ON, IEEE, 4
  juillet 2011 (2011-07-04), pages 54-59,
  XP032037393, DOI: 10.1109/ISVLSI.2011.60 ISBN:
  978-1-4577-0803-9**
- **ROTISLAV DOBKIN: "Credit-based
  Communication in NoCs", INTERNET CITATION,
  27 avril 2007 (2007-04-27), pages 1-8,
  XP002666342, Extrait de l'Internet: URL:http://
  eecourses.technion.ac.il/049036
  /Reuven%20Dobkin%20Credits%2024 apr08-
  print.pdf [extrait le 2011-12-23]**

EP 2 771 800 B1

## Description

### Domaine technique de l'invention

L'invention est relative aux techniques de gestion de flux sur un réseau, notamment une gestion selon la technique des « crédits » dans un réseau sur puce (NoC).

### État de la technique

Les techniques de gestion de flux cherchent à organiser de manière optimale la transmission de paquets de données entre un producteur et un consommateur situés sur deux noeuds distincts d'un canal de transmission partagé asynchrone, par exemple un réseau.

Dans le cadre d'une gestion de flux selon la technique des crédits, le consommateur comprend une mémoire tampon ou file d'entrée pour chaque producteur, dans laquelle sont stockés les paquets en attente de consommation. Chaque producteur dispose d'un compteur de crédit qui démarre à la taille, en nombre de paquets, de la file d'entrée du consommateur.

A chaque envoi d'un paquet, le producteur décrémente son compteur de crédit. Il cesse les envois lorsque son compteur atteint zéro.

Les paquets envoyés arrivent dans la file d'entrée du consommateur. Celui-ci, après avoir consommé un certain nombre de paquets de sa file, renvoie au producteur un crédit indicatif de la place disponible dans la file. En recevant ce crédit, le producteur incrémente son compteur du nombre correspondant, ce qui lui permet de continuer à envoyer des paquets.

Des optimisations de cette technique consistent à régler le seuil d'envoi des crédits pour que le producteur les reçoive avant que son compteur n'ait atteint zéro, mais pour que leur nombre n'engorge pas le canal de transmission en sens inverse.

Une telle gestion de flux est utilisée, par exemple, dans le bus dénommé « PCI-Express ».

La technique des crédits est généralement utilisée dans les situations où la bande passante du canal de transmission est faible par rapport à la capacité de traitement des producteurs et consommateurs, par exemple dans le cadre d'un réseau macroscopique. Cela signifie que le consommateur est capable de vider sa file d'entrée plus vite qu'elle ne peut être remplie par le canal de transmission, et que le producteur est capable de remplir une file de sortie en moins de temps qu'il ne faut pour la vider par le canal de transmission. Dès lors, la structure des paquets importe peu, car les producteurs et consommateurs disposent de suffisamment de ressources entre deux envois de paquet pour mettre en oeuvre des conversions de format, si cela est requis.

Dans un réseau sur puce, la bande passante du réseau est adaptée à la capacité des producteurs et consommateurs. On est alors amené à tenir compte des tailles de mot exploitées par le consommateur et le producteur, de sorte qu'un même paquet peut être formé de mots de tailles différentes, selon qu'il est vu par le producteur ou par le consommateur. Compter des crédits en nombres de paquets peut alors s'avérer inadapté.

Le document WO 2006/059277 divulgue un procédé de gestion de flux de données entre un producteur et un consommateur selon la technique des « crédits », comprenant les étapes suivantes:

- décrémenter un compteur de crédit à chaque émission d'une série de données par le producteur ;
- cesser d'émettre des données lorsque le compteur de crédit atteint zéro ;
- envoyer un crédit à chaque fois que le consommateur a consommé une série de données ; et
- incrémenter le compteur de crédit à la réception du crédit ; où la taille $W_c$ des données utilisable par le consommateur et la taille $W_p$ des données émises par le producteur sont telles que $W_c/W_p > 1$, et le crédit, en nombre de données de taille $W_c$, s'exprime par :

$$C = N_a/Q \text{ ¶}$$

où $N_a$ est la place disponible, en nombre de données de taille $W_c$, dans une file d'entrée du consommateur prévue pour stocker les données en attente de consommation et $Q=1$.

### Résumé de l'invention

On souhaite ainsi disposer d'une gestion de flux par crédits satisfaisante dans une situation où la bande passante du canal de transmission est adaptée à la capacité des producteurs et consommateurs. On souhaite notamment que cette gestion tienne compte des tailles de mot différentes utilisées par les producteurs et les consommateurs.

On tend à satisfaire ce besoin en prévoyant un procédé de gestion de flux de données entre un producteur et un consommateur selon la technique des « crédits », comprenant les étapes consistant à décrémenter un compteur de crédit à chaque émission d'une série de données par le producteur ; cesser d'émettre des données lorsque le compteur de crédit atteint zéro ; envoyer un crédit à chaque fois que le consommateur a consommé une série de données ; et incrémenter le compteur de crédit à la réception du crédit. La taille Wc des données utilisable par le consommateur et la taille Wp des données émises par le producteur sont telles que Wc/Wp > 1, et le crédit, en nombre de données de taille Wc, s'exprime par :

$$C = (Na - Q{\bullet}F)/Q$$

où Na est la place disponible, en nombre de données de taille Wc, dans une file d'entrée du consommateur prévue pour stocker les données en attente de consommation, Q un facteur tel que $1 < Q \leq Wc/Wp$, et F le nombre de données non encore reçues dans la file et correspondant à des crédits envoyés.

Selon un mode de mise en oeuvre, le consommateur est une mémoire de mots de Wc bits et les données sont émises sur un réseau sous forme de paquets de mots de Wp bits.

Selon un mode de mise en oeuvre, le facteur Q est choisi égal à Wc/Wp lorsque les mots des paquets sont stockés à des emplacements aléatoires de la mémoire.

Selon un mode de mise en oeuvre, le facteur Q tend vers (P+1)/P, où P est la taille d'une salve de mots de Wp bits à stocker dans des emplacements contigus de la mémoire.

Selon un mode de mise en oeuvre, un crédit est envoyé à chaque fois que le consommateur a consommé un nombre seuil de mots de Wc bits au plus égal à S/Q, où S est la capacité de la file.

Selon un mode de mise en oeuvre, le nombre seuil est égal à S/Q diminué du nombre de mots transmissibles pendant la durée d'arrivée à destination d'un crédit.

Selon un mode de mise en oeuvre, F est déterminé comme la différence entre le cumul des crédits envoyés et le nombre des données reçues par le consommateur.

**Description sommaire des dessins**

Des modes de réalisation seront exposés dans la description suivante, faite à titre non limitatif en relation avec les figures jointes parmi lesquelles :

- la figure 1 représente schématiquement un réseau sur puce connecté à une mémoire externe ;

- la figure 2 représente schématiquement et partiellement des circuits impliqués dans une gestion de flux par crédits, dans la situation de la figure 1 ;

- la figure 3 représente un exemple de succession de mots tels que produits en un noeud du réseau et tels que consommés par la mémoire externe ; et

- la figure 4 représente un autre exemple de succession de mots tels que produits en un noeud du réseau et tels que consommés par la mémoire externe.

**Description d'un mode de réalisation préféré de l'invention**

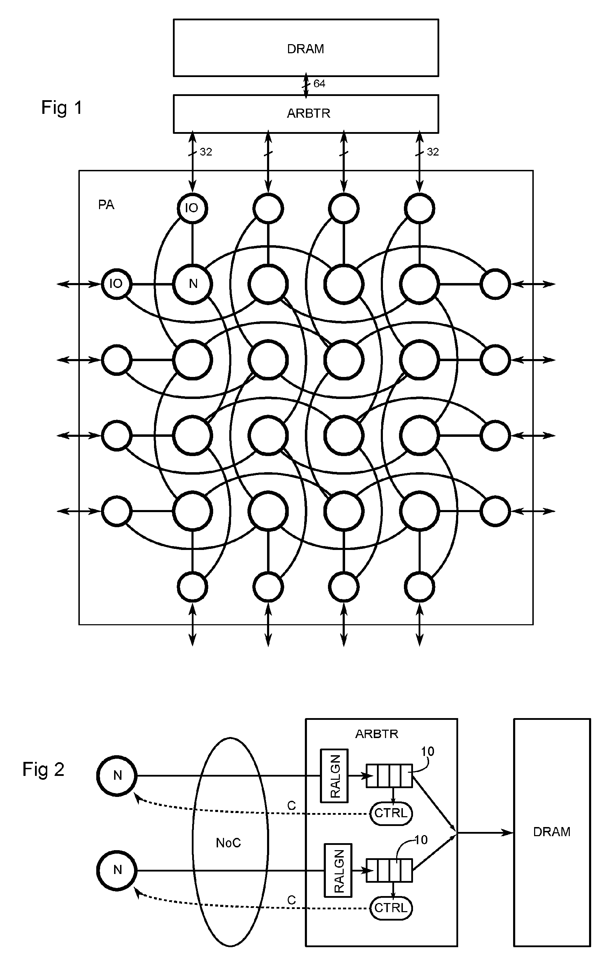

La figure 1 représente schématiquement une matrice de processeurs PA comprenant 4x4 noeuds de calcul N agencés dans un réseau sur puce de topologie torique repliée, telle que décrite dans la demande de brevet US 2011-0058569. Dans une topologie matricielle, chaque noeud est relié à deux autres noeuds de la même rangée et à deux autres noeuds de la même colonne, par des liaisons point à point bidirectionnelles. Dans une topologie torique, les noeuds de la matrice sont en outre reliés en boucle dans chaque rangée et dans chaque colonne, de sorte que tous les noeuds ont la même structure physique quant à leurs interconnexions, notamment les noeuds situés aux bords de la matrice. Dans une topologie repliée, qui est celle représentée en figure 1, chaque noeud (sauf s'il est situé en bord de matrice) est relié à deux autres noeuds de même parité dans la rangée et dans la colonne, de sorte que les liaisons entre les noeuds aient sensiblement la même longueur.

Chaque noeud N comprend un routeur à cinq voies qui gère les quatre liaisons, dites Nord, Sud, Est et Ouest, vers les noeuds suivants dans la rangée et la colonne, et une liaison avec un module de calcul, non représenté, constitué par exemple d'une grappe de processeurs interconnectés par un bus parallèle.

La matrice PA, pouvant être sous la forme d'un circuit intégré indépendant, est généralement associée à une mémoire dynamique externe DRAM. Cette mémoire est reliée à la matrice PA par une ou plusieurs de ses interfaces d'entrée/sortie IO, en fonction de la bande passante des interfaces et de la mémoire. On s'intéresse ci-après essentiellement à l'écriture de données dans la mémoire DRAM, qui sera donc considérée comme le « consommateur », les noeuds de la matrice étant les « producteurs ».

Dans l'exemple représenté, on utilise quatre interfaces IO reliées à un circuit d'arbitrage ARBTR qui gère les transferts de données entre les interfaces IO et le bus unique de la mémoire. Dans un exemple pratique, le bus de la mémoire a une largeur de 64 bits et chacune des interfaces IO communique par un bus de 32 bits, de même largeur que les bus servant aux liaisons internes du réseau. Avec cette configuration, il y a un équilibre théorique entre les bandes passantes de la mémoire et du réseau lorsque le débit par fil des bus du réseau est la moitié du débit par fil du bus mémoire.

Ainsi, la mémoire consomme des mots de $Wc = 64$ bits, alors que le réseau produit des paquets de mots de $Wp = 32$ bits.

La figure 2 représente schématiquement et partiellement une structure permettant de mettre en oeuvre une gestion de flux par crédits dans l'exemple de la figure 1. L'arbitre ARBTR comprend une file d'entrée 10 pour chaque noeud N du réseau susceptible d'écrire des données dans la mémoire DRAM. En pratique, les rôles des noeuds N sont interchangeables, d'où il résulte que l'arbitre comprend une file pour chaque noeud, donc 16 files dans le cadre de l'exemple.

Les files 10 sont prévues pour contenir les mots en attente de consommation par la mémoire DRAM. Ces mots sont donc, de préférence, des mots de la largeur du bus mémoire, ici 64 bits. Par contre, les paquets arrivant par le réseau sont formés de mots conformes à la largeur des liaisons internes du réseau, ici 32 bits. Ainsi, chaque file est précédée d'un circuit de réalignement RALGN qui juxtapose les mots de 32 bits du paquet entrant pour former des mots de 64 bits à placer dans la file.

Chaque file est gérée par un circuit de commande CTRL qui comptabilise la place disponible dans la file et les mots consommés pour envoyer des crédits C au noeud producteur, par le réseau. En recevant un crédit, le producteur incrémente son compteur de crédit, et envoie de nouvelles données tant que son compteur n'atteint pas zéro.

Selon les techniques classiques, l'unité du crédit est le paquet. Cela sous-entend que le producteur et le consommateur utilisent la même définition de « paquet ». Or, dans le cas présent, un paquet est formé de mots de 32 bits alors que le consommateur requiert des mots de 64 bits. Un paquet n'est pas vu de la même manière du côté consommateur que du côté producteur.

Pour échapper à cette difficulté, on commence par redéfinir l'unité du crédit. On propose que le crédit soit indicatif du nombre de mots de la largeur $Wc$ de la file d'entrée, ici des mots de 64 bits directement consommables par la mémoire DRAM.

Si on intègre cette définition directement dans les calculs classiques, le crédit à renvoyer vaudrait +1 pour chaque emplacement libre de la mémoire FIFO. Du côté du producteur, un crédit de 1 correspondrait à 64 bits, donc à une paire de mots de 32 bits à envoyer.

Or ces deux mots peuvent ne pas correspondre à des emplacements contigus dans la mémoire DRAM, de sorte qu'ils ne peuvent pas être écrits en un seul mot de 64 bits dans la mémoire. Même s'ils ont des destinations contiguës, le premier mot de 32 bits peut avoir une adresse qui démarre à la deuxième moitié d'un mot mémoire de 64 bits. Dans ce cas également, les deux mots ne peuvent pas être écrits en mémoire en un seul mot de 64 bits.

De tels mots « désalignés », comme des mots à écrire à des adresses aléatoires, sont écrits en mémoire par l'intermédiaire de deux mots de 64 bits consécutifs, c'est-à-dire en deux cycles. Pour cela, le circuit de réalignement RALGN a pour fonction d'analyser les destinations en mémoire des mots de 32 bits entrants, destinations figurant dans l'entête du paquet :

• si deux mots de 32 bits ont des destinations contiguës, et que la destination du premier mot correspond à une adresse d'un mot mémoire de 64 bits, les deux mots sont juxtaposés dans un seul emplacement de 64 bits de la file ;

• dans le cas contraire, c'est-à-dire si les mots de 32 bits sont désalignés, ils sont placés dans deux mots de 64 bits consécutifs de la file, dans la première moitié ou la deuxième moitié du mot de 64 bits respectif, selon l'adresse de la destination en mémoire. La moitié inutilisée du mot de 64 bits est marquée comme « invalidée » à l'écriture dans la mémoire. En effet, il est possible, à l'écriture d'un mot dans une mémoire DRAM, d'invalider des octets individuels, de sorte que les emplacements correspondants ne soient pas affectés par l'écriture. Cela permet d'écrire des octets individuels en mémoire malgré une taille de bus supérieure à l'octet.

Il en résulte que deux mots de 32 bits peuvent occuper deux emplacements de 64 bits dans la file. Cela correspond au pire cas. Pour en tenir compte, le crédit effectivement utilisé est divisé par 2. Cela revient à présenter au producteur une file de taille deux fois plus petite, du point de vue du nombre de bits.

Ainsi, le crédit effectif à utiliser s'exprime par :

$$C = Na/2,$$

où Na est le nombre de places disponibles dans la mémoire FIFO, en mots de 64 bits côté consommateur, ou en paires de mots de 32 bits côté producteur.

De façon générale, si la taille des mots du côté producteur est Wp, et la taille des mots du côté consommateur est Wc, le crédit effectif s'exprime par :

$$C = Na \bullet Wp/Wc.$$

Compte tenu du fait que dans un réseau sur puce on travaille en « flux tendus », c'est-à-dire que la bande passante du réseau est adaptée à la capacité des producteurs et consommateurs, ce calcul peut s'avérer trop optimiste, même s'il tient compte du pire cas. En effet, ce calcul ne tient pas compte du fait que la place Na disponible dans la file à un instant d'observation pourrait être remplie à tout moment par des données encore en transit ou « en vol », ces données correspondant aux derniers crédits envoyés. Dans un réseau macroscopique, où les producteurs et consommateurs disposent d'importantes ressources matérielles, ce problème est transparent du fait que la taille des files d'entrée est dimensionnée avec suffisamment de marge. Dans un réseau sur puce, on cherche à minimiser la taille des files.

Ainsi, on propose d'affiner le calcul du crédit pour tenir compte de ces données « en vol ». Le crédit s'exprime alors par :

$$C = (Na - K \bullet F)/K, \qquad (1)$$

où K = Wc/Wp et F correspond aux données « en vol ». F est égal à la différence entre le cumul des crédits C envoyés et le nombre de mots de 64 bits écrits dans la file d'entrée. Cette valeur F est fournie, par exemple, par un compteur géré par le circuit de commande CTRL, incrémenté du montant de chaque crédit C envoyé et décrémenté à chaque occupation d'un emplacement (de 64 bits) de la file d'entrée.

On n'a pas encore précisé à quel moment envoyer un crédit. Le critère d'envoi des crédits est également susceptible d'optimisation. En effet, les envois de crédits ne doivent pas être trop fréquents, sous peine d'engorger le réseau, ni trop peu fréquents, sous peine d'arrêter prématurément la production de données. Un critère simple est d'envoyer un crédit à chaque fois que la mémoire a consommé un nombre seuil de mots. Le seuil est inférieur ou égal à 1/K = 1/2 de la capacité de la file d'entrée. En effet, avec les techniques des crédits classiques, le plus grand intervalle d'attente pour envoyer un crédit correspond à la durée minimale nécessaire à vider une file pleine, auquel cas le crédit est susceptible d'être égal à la taille de la file. Dans le cas présent, comme un crédit de 1 peut résulter, dans le pire cas, à une occupation de K emplacements dans la file, les crédits sont envoyés à une fréquence K fois supérieure, et sont au plus égaux à 1/K de la taille de la file.

En fait, il vaut mieux fixer le seuil à une valeur légèrement inférieure à S/K = S/2, où S est la capacité de la file, mais pas trop basse non plus, pour éviter un trafic de crédits trop important. Dans l'exemple considéré, on choisit S/2 diminué du nombre de paires de mots de 32 bits transmissibles pendant la durée de transit d'un crédit.

Dans le cas général, où K est un entier quelconque supérieur à 1, on exprime le seuil par :

$$Tc = S/K - N_{tc}(K),$$

où $N_{tc}(K)$ est le nombre de K-uplets de mots producteur transmissibles pendant le temps de transit tc d'un crédit. Le temps de transit tc pouvant être exprimé en cycles d'horloge, et puisqu'on transmet en général un mot producteur par cycle, on a $N_{tc}(K) = tc/K$.

Le temps de transit d'un crédit dépendant du nombre de routeurs à traverser pour arriver à destination, on prendra une valeur moyenne.

Jusqu'ici on a fait intervenir dans les divers calculs un facteur K correspondant à une situation pire cas. Il existe des situations où on peut, à la place de K, utiliser un facteur Q réglable tendant vers 1. Les figures suivantes permettent d'illustrer cela par des exemples. L'expression du crédit devient :

$$C = (Na - Q \cdot F)/Q = Na/Q - F,$$

où Q est un facteur tel que $1 < Q \leq K$.

Le seuil pour décider de l'envoi des crédits devient Tc = S/Q - tc/Q.

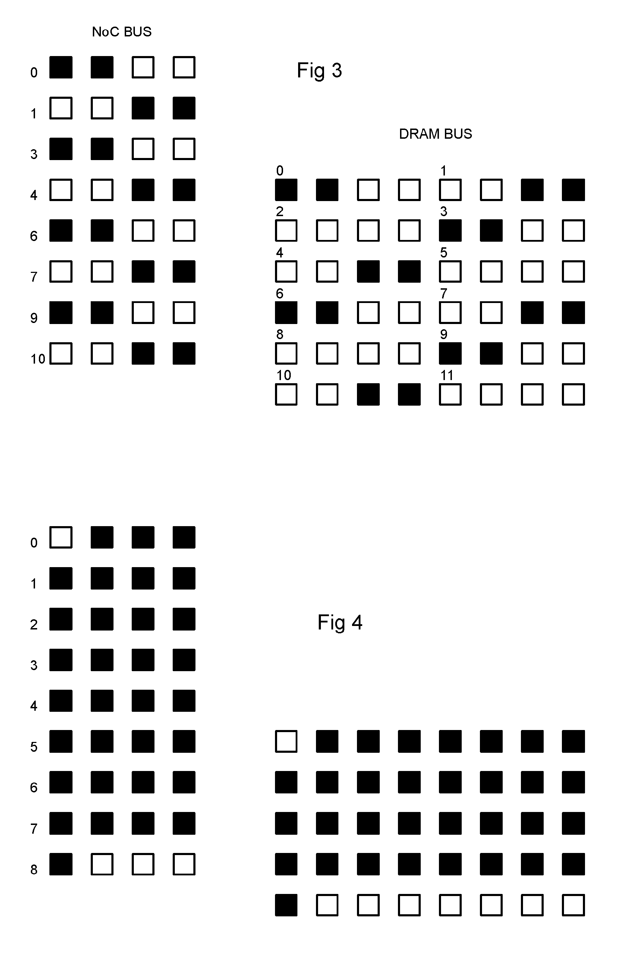

La figure 3 représente un premier exemple de succession de mots tels que produits (à gauche) et tels que consommés par la mémoire DRAM, ou tels qu'empilés dans la file d'entrée (à droite). Le producteur envoie un paquet de 8 mots de 32 bits. Le processus exécuté par le producteur est tel qu'il écrit en mémoire une succession de paires d'octets contigus (carrés noirs) espacées de 4 octets (carrés blancs). Les « espaces » de 4 octets sont marqués comme invalidés, à ne pas écrire en mémoire.

Les positions mémoire, comptées en mots de 32 bits, sont indiquées sur la figure. On s'aperçoit que les positions 2, 5 et 8 ne sont pas utilisées par le producteur - en effet, elles correspondent à des mots de 32 bits vides, qui ne sont donc pas envoyés par le producteur.

Du côté du consommateur, les mots de 32 bits de positions 0 et 1 se juxtaposent dans un seul mot mémoire de 64 bits. Les mots suivants, de positions 3 et 4, sont désalignés. On place le premier à la fin d'un premier mot mémoire de 64 bits, et le second au début d'un deuxième mot mémoire. La place restante dans ces mots de 64 bits constitue du « bourrage », des octets invalidés qui n'affecteront pas l'état de la mémoire. Les mots de positions 6 et 7 sont de nouveau alignés et se juxtaposent dans un seul mot mémoire...

Lorsque le paquet de 8 mots de 32 bits aura été écrit en mémoire, on aura utilisé 6 mots de 64 bits. Dans le pire cas, on aurait utilisé 8 mots de 64 bits. Dans cet exemple on peut se contenter d'un facteur Q = 3/2.

La figure 4 représente un deuxième exemple de succession de mots tels que produits (à gauche) et tels que consommés par la mémoire DRAM. Le producteur envoie une succession de 32 octets contigus, mais dont le premier est désaligné. Ces octets sont transmis dans deux paquets successifs de 8 mots de 32 bits. On n'a représenté que le premier mot du deuxième paquet, en position 8.

Lorsque ces 32 octets, transmis en 9 mots de 32 bits, auront été écrits en mémoire, on aura utilisé 5 mots de 64 bits. Dans cet exemple, on peut se contenter d'un facteur Q = 10/9.

De façon générale, si la succession de données produites présente un caractère régulier, on peut ajuster le facteur Q en fonction de la nature de cette régularité. Pour une salve de données transmissible dans P mots contigus de Wp bits, on peut choisir Q = (P+1)/P. Dans le premier exemple, on a P = 2, et dans le deuxième P = 9.

La taille de salve P peut être connue d'avance, au moins par le processus producteur des données, par exemple à la compilation du programme de mise en oeuvre du processus, ou par le programmeur. Cette taille P peut être transmise dans l'entête des paquets afin de paramétrer le calcul des crédits au niveau du consommateur.

En pratique, il n'est pas prudent de modifier le facteur Q à chaque paquet, du moins vers des valeurs plus favorables (décroissantes), car chaque facteur reste en vigueur au début du paquet suivant, pouvant avoir un facteur Q moins favorable, pendant le temps de transit du nouveau facteur Q. Ainsi, on envisagera plutôt d'utiliser un facteur Q constant, programmé à l'initialisation du système, pour chaque file.

Bien que l'on puisse envisager un circuit dédié aux calculs impliquant le facteur variable Q, celui-ci, nécessitant une division, est relativement complexe et devrait être prévu pour chaque file 10 du circuit d'arbitrage ARBTR, dans l'exemple étudié. On préférera appliquer un coefficient Q majoré plus facile à utiliser. En rendant Q sélectionnable parmi 2, 4/3, 8/7... $2^i/(2^i - 1)$, le crédit s'exprime par :

C = Na - (Na » n) - 1 - F, si les n bits de poids faible de Na ne sont pas tous nuls, ou

C = Na - (Na » n) - F, si les n bits de poids faible sont tous nuls,

où « » n » désigne un décalage à droite de n bits, et :

- n = 1 pour Q = 2,

- n = 2 pour Q = 4/3,

- n = 3 pour Q = 8/7...

- n = i pour $Q = 2^i/(2^i - 1)$.

Le calcul se résume alors à un décalage à droite et deux ou trois soustractions. Dans ce cas, pour une taille de salve de P = 2, pour laquelle on a idéalement Q = 3/2, on prendra Q = 2, soit n = 1. Pour une taille de salve de P = 9, pour laquelle on a idéalement $Q = 10/9$, on prendra $Q = 8/7$, soit $n = 3$. De façon générale, on choisit $Q = 2^i/(2^i - 1)$, où $i$ est un entier choisi pour que $Q$ soit le plus proche possible de $(P+1)/P$ par excès.

Les deux expressions, conditionnelles, du crédit ci-dessus, sont équivalentes à l'expression unique :

$$C = ((Na \ll n) - Na) \gg n - F.$$

Un décalage à droite ou à gauche de « n » s'effectue à l'aide d'un multiplexeur qui sélectionne la partie souhaitée du mot à décaler, et substitue les bits manquants par des bits à 0.

On a considéré dans ce qui précède que la file d'entrée avait des emplacements de la taille du bus mémoire (64 bits). On peut également envisager que ces emplacements soient adaptés à la taille des mots entrants, de 32 bits. Le circuit de réalignement RALGN serait alors placé à la sortie de la file, et configuré pour former des mots de 64 bits à écrire dans la mémoire. Ces mots de 64 bits pourraient être formés au vol en lisant les mots de la file à deux fois la cadence d'écriture dans la mémoire.

## Revendications

1. Procédé de gestion de flux de données entre un producteur et un consommateur selon la technique des « crédits », comprenant les étapes suivantes :

   • décrémenter un compteur de crédit à chaque émission d'une série de données par le producteur ;
   • cesser d'émettre des données lorsque le compteur de crédit atteint zéro ;
   • envoyer un crédit à chaque fois que le consommateur a consommé une série de données ; et
   • incrémenter le compteur de crédit à la réception du crédit ;

   où la taille Wc des données utilisable par le consommateur et la taille Wp des données émises par le producteur sont telles que Wc/Wp > 1, **caractérisé en ce que** le crédit, en nombre de données de taille Wc, s'exprime par :

   $$C = (Na - Q{\cdot}F)/Q$$

   où Na est la place disponible, en nombre de données de taille Wc, dans une file d'entrée (10) du consommateur prévue pour stocker les données en attente de consommation, Q un facteur tel que $1 < Q \leq Wc/Wp$, et F le nombre de données non encore reçues dans la file et correspondant à des crédits envoyés.

2. Procédé selon la revendication 1, dans lequel le consommateur est une mémoire (DRAM) de mots de Wc bits et les données sont émises sur un réseau sous forme de paquets de mots de Wp bits.

3. Procédé selon la revendication 2, dans lequel le facteur Q est choisi égal à Wc/Wp lorsque les mots des paquets sont stockés à des emplacements aléatoires de la mémoire.

4. Procédé selon la revendication 2, dans lequel le facteur Q tend vers (P+1)/P, où P est la taille d'une salve de mots de Wp bits à stocker dans des emplacements contigus de la mémoire.

5. Procédé selon la revendication 1, dans lequel un crédit est envoyé à chaque fois que le consommateur a consommé un nombre seuil de mots de Wc bits au plus égal à S/Q, où S est la capacité de la file.

6. Procédé selon la revendication 5, dans lequel le nombre seuil est égal à S/Q diminué du nombre de mots transmissibles pendant la durée d'arrivée à destination d'un crédit.

7. Procédé selon la revendication 1, dans lequel F est déterminé comme la différence entre le cumul des crédits envoyés et le nombre des données reçues par le consommateur.

8. Procédé selon la revendication 4, dans lequel $Q = 2^i/(2^i - 1)$, où $i$ est un entier choisi pour que Q soit le plus proche possible de (P+1)/P par excès, le crédit étant alors exprimé par :

C = Na - (Na » i) - 1 - F, si les i bits de poids faible de Na ne sont pas tous nuls, ou

C = Na - (Na » i) - F, si les i bits de poids faible sont tous nuls,

où « » i » désigne un décalage à droite de i bits.

9. Procédé selon la revendication 4, dans lequel $Q = 2^i/(2^i - 1)$, où i est un entier choisi pour que Q soit le plus proche possible de (P+1)/P par excès, le crédit étant alors exprimé par :

$$C = ((Na \ll i) - Na) \gg i - F,$$

où « » i » désigne un décalage à droite de i bits, et « « i » un décalage à gauche de i bits.

**Patentansprüche**

1. Verfahren zur Verwaltung von Datenflüssen zwischen einem Hersteller und einem Verbraucher nach der Technik der « Kredite », umfassend die folgenden Schritte, die darin bestehen:

   • bei jeder Übertragung einer Reihe von Daten durch den Hersteller einen Kreditzähler zu dekrementieren;
   • die Datenübertragung zu unterbrechen, wenn der Kreditzähler Null erreicht;
   • einen Kredit zu senden, jedes Mal wenn der Verbraucher eine Reihe von Daten verbraucht hat; und
   • den Kreditzähler beim Empfang des Kredits zu inkrementieren;

   **dadurch gekennzeichnet, dass** die vom Verbraucher verwendbare Größe Wc der Daten und die Größe Wp der vom Hersteller übertragenen Daten derart sind, dass Wc/Wp > 1, und dass der Kredit, als Anzahl von Daten der Größe Wc, wie folgt ausgedrückt wird:

$$C = (Na - Q \bullet F)/Q$$

   wobei Na der verfügbare Platz, als Anzahl von Daten der Größe Wc, in einer Eingangswarteschlange (10) des Verbrauchers ist, die zum Speichern der auf Verbrauch wartenden Daten vorgesehen ist, Q ein derartiger Faktor ist, dass $1 < Q \leq$ Wc/Wp, und F die Anzahl von Daten ist, die noch nicht in der Warteschlange empfangen sind, und die gesandten Krediten entsprechen.

2. Verfahren nach Anspruch 1, bei dem der Verbraucher ein Speicher (DRAM) von Wörtern von Wc Bits ist und bei dem die Daten in Form von Paketen von Wörtern von Wp Bits in einem Netzwerk übertragen werden.

3. Verfahren nach Anspruch 2, bei dem der Faktor Q gleich Wc/Wp gewählt wird, wenn die Wörter der Pakete an zufälligen Speicherplätzen des Speichers gespeichert sind.

4. Verfahren nach Anspruch 2, bei dem der Faktor Q gegen (P+1)/P strebt, wobei P die Größe eines Bursts von Wörtern von Wp Bits ist, die in benachbarten Speicherplätzen des Speichers zu speichern sind.

5. Verfahren nach Anspruch 1, bei dem ein Kredit gesandt wird, jedes Mal wenn der Verbraucher eine Schwellenanzahl von Wörtern von Wc Bits höchstens gleich S/Q verbraucht hat, wobei S die Kapazität der Warteschlange ist.

6. Verfahren nach Anspruch 5, bei dem die Schwellenanzahl gleich S/Q ist, vermindert um die Anzahl von Wörtern, die während der Zeit bis zur Ankunft eines Kredits am Bestimmungsort übertragbar sind.

7. Verfahren nach Anspruch 1, bei dem F als die Differenz zwischen der Summierung der gesandten Kredite und der Anzahl der durch den Verbraucher empfangenen Daten bestimmt ist.

8. Verfahren nach Anspruch 4, bei dem Q = 2i/(2i - 1), wobei i eine ganze Zahl ist, die so ausgewählt wird, dass Q aufgerundet so nah wie möglich von (P+1)/P ist, wobei der Kredit dann wie folgt ausgedrückt wird:

C = Na - (Na » i) - 1 - F, wenn die i niederwertigsten Bits von Na nicht alle Null sind, oder
C = Na - (Na » i) - F, wenn die i niederwertigsten Bits alle Null sind,

wobei « » i » eine Rechtsverschiebung um i Bits bezeichnet.

9. Verfahren nach Anspruch 4, bei dem $Q = 2^i/(2^i - 1)$, wobei i eine ganze Zahl ist, die so ausgewählt wird, dass Q aufgerundet so nah wie möglich von (P+1)/P ist, wobei der Kredit dann wie folgt ausgedrückt wird:

$$C = ((Na \ll i) - Na) \gg i - F,$$

wobei « » i» eine Rechtsverschiebung um i Bits bezeichnet, und « « i» eine Linksverschiebung um i Bits.

**Claims**

1. A credit-based data flow control method between a consumer device and a producer device, comprising the steps of:

   • decrementing a credit counter for each transmission of a sequence of data by the producer device;
   • arresting data transmission when the credit counter reaches zero;
   • sending a credit each time the consumer device has consumed a data sequence; and
   • incrementing the credit counter upon receipt of each credit;

   wherein the size Wc of the data usable by the consumer device and the size Wp of the data transmitted by the producer device are such that Wc/Wp > 1,
   **characterized in that** the credit, in number of data of size Wc, is expressed by:

$$C = (Na - Q \bullet F)/Q$$

   where Na is the available space, in number of data of size Wc, in an input queue (10) of the consumer device configured to store the data awaiting consumption, Q is a factor such that $1 < Q \leq Wc/Wp$, and F is the number of data not yet received in the queue and corresponding to sent credits.

2. The method of claim 1, wherein the consumer device is a memory (DRAM) of Wc-bit words and the data is transmitted over a network in packets of Wp-bits words.

3. The method of claim 2, wherein the factor Q is chosen equal to Wc/Wp when the words of the packets are stored in random locations in the memory.

4. The method of claim 2, wherein the factor Q tends to (P+1)/P, where P is the size of a burst of Wp-bit words to store in contiguous memory locations.

5. The method of claim 1, wherein a credit is sent each time the consumer device has consumed a threshold number of Wc-bit words at most equal to S/Q, where S is the capacity of the queue.

6. The method of claim 5, wherein the threshold number is equal to S/Q minus the number of words that can be transmitted during the transit time of a credit.

7. The method of claim 1, wherein F is determined as the difference between the accumulated sent credits and the number of data received by the consumer device.

8. The method of claim 4, wherein $Q = 2^i/(2^i - 1)$, where i is an integer chosen such that Q is as close as possible to (P+1)/P in excess, the credit then being expressed by:

   C = Na - (Na » i) - 1 - F, if the i least significant bits of Na are not all zero, or

$C = Na - (Na \gg i) - F$, if the i least significant bits are all zero,

where "$\gg i$" denotes a right shift by i bits.

**9.** The method of claim 4, wherein $Q = 2^i/(2^i - 1)$, where i is an integer chosen such that Q is as close as possible to (P+1)/P in excess, the credit then being expressed by:

$$C = ((Na \ll i) - Na) \gg i - F,$$

where "$\gg i$" denotes a right shift by i bits, and "$\ll i$" a left shift by i bits.

Fig 1

DRAM

64

ARBTR

PA

IO

32    32

IO    N

IO

Fig 2

N

NoC

C

ARBTR

RALGN    10

CTRL

N

RALGN    10

C

CTRL

DRAM

NoC BUS

Fig 3

DRAM BUS

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006059277 A
- US 20110058569 A